# EUROPEAN PATENT APPLICATION

(11) **EP 3 330 580 A1**
(43) Date of publication of application: **06.06.2018**
(21) Application number: 16460091.8
(22) Date of filing: 05.12.2016
(51) Int. Cl.: F16J 15/06, F16J 15/10, H02G 5/06

(54) **USE OF A COATED O-RING FOR A GAS-INSULATED ELECTRIC EQUIPMENT**

(71) Applicant: ABB Schweiz AG, 5400 Baden (CH)
(72) Inventor: Siwek, Artur, 31-421 Krakow (PL); Tehlar, Denis, 8050 Zurich (CH); Kuhl, Daniel, 63477 Maintal (DE); Aschwanden, Pia, 6410 Goldau (CH)
(74) Representative: Chochorowska-Winiarska, Krystyna

(57) **Abstract**

The invention relates to an insulation assembly (1,1') for gas-insulated electric apparatus and a specially to the insulation assembly (1) which is constructed as an insulator body (2) inserted between connecting flanges (5,6) of the gas -insulated switching installation where the flanges (5,6) are closed by an outer metal ring (7) closing the insulating chamber (4) filled with an insulating has (8) or to the insulation assembly (1') having a cover (11) closing the insulating chamber (4') filled with an insulating has (8). The use of the insulation assembly is characterized in that the gas seal (9) has an O-ring or X-ring type shape and consists of seal core (9a) covered with a coating (9b) and the seal core ring (9a) is made from different material than the coating (9b).

## Description

The invention relates to an insulation assembly for gas-insulated electric apparatus and a specially to the insulation assembly which is constructed as an insulator body inserted between connecting flanges of the gas -insulated switching installation where the flanges are closed by an outer metal ring. Gas insulated electrical apparatus like switchgears - high and medium voltage, circuit breakers, life tank breakers etc. are filled with insulating gases.

From US patent US 5,723,814 there is known a supporting insulator for installation between two connecting flanges of a gas -insulated switching installation having an outer ring. The insulator is equipped with an insulator body having the form of a disk being formed of hardened cast resin; at least one cast fitting which is being cast in the insulator body; an outer ring placed in a gap situated between the connecting flanges of the gas -insulated switching installation. The insulated body is held externally by the outer ring and the sealing is placed in the space between the flanges, the outer ring and the two face sides of the insulator body.

Very similar solution is known from JP patent JP2614657. The supporting insulator has an insulator body inserted between connecting flanges of the gas -insulated switching installation (vessels) where the flanges are closed by an outer metal ring.

In the both of the solutions presented above a sealing system is used for keeping the insulating gas inside the switching installation. In both solutions as the sealing object an O-ring seal is used. These O-ring seal is placed on a collar made on an external surface of the insulating body between an internal surface of the connecting flange and between an internal side of the outer ring.

These O-ring seal can be also placed in a special grove made in the insulation body on the external surface of the insulation body between the internal surface of the connecting flange. In such situation the O-ring seal has no contact with the internal side of the outer ring. Such solution is presented in the Japanese patent JP2614657 and the other patent EP0288715.

In the all known solution the sealing systems like O-ring seals or gaskets, usually are made of different types of rubber like EPDM (Ethylene Propylene Diene), NBR (Nitrile Butadiene Rubber), FKM (Fluoroelastomer), IIR (Isobutylene Isoprene Rubber). All rubber sealing materials are more or less permeable for insulating gases therefore all electrical equipment, in which rubber sealing are used, will lose the gas regardless of sealing design and quality. Loss of insulating gas can have two negative consequences: an internal pressure drop and emission to the atmosphere. There are two main mechanisms of gas leakage through sealing system utilizing rubber gaskets, leakage through the interface and permeation through the sealing material. For good designed and assembled systems the permeation mechanism is dominating source of gas leakage. So there is a need for a solution which minimize or exclude the second mechanism and does not affect the former one.

Use of gas seal in an insulation assembly for gas-insulated electric apparatus, where the insulation assembly comprises an insulator body placed axially round axis X-X on a current- carrying conductor in an insulating chamber, between the connecting flanges and an outer metal ring, closing the insulation chamber filled with a gas insulating medium, or where the assembly comprises a cover placed axially round axis Y-Y in an insulating chamber filled with a gas insulating medium, the said use is characterized in that the gas seal has an O-ring or X-ring type shape and consists of seal core ring covered with at least one layer of a coating. The seal core ring is made from different material than the coating.

Preferably the use of gas seal of an insulation assembly for gas-insulated electric apparatus, characterized in that the coating is arranged on the two faces of the seal core ring in a way that one face of the seal core ring is covered by a different coating that the other coating placed on the other face of the seal core ring.

Preferably the use of gas seal of an insulation assembly for gas-insulated electric apparatus, characterized in that the seal core ring is made from material having a coefficient of gas permeability P lower than 2.0*10⁻¹⁶ expressed in mole meters per square meters second pascal [mol*m/(m²*s*Pa)] for carbon dioxide CO2 and 0.8*10⁻¹⁸ expressed in mole meters per square meters second pascal [mol*m/(m²*s*Pa)] for sulfur hexafluoride SF6 gas.

Preferably the use of gas seal of an insulation assembly for gas-insulated electric apparatus, characterized in that the seal core ring is made from metal, metal alloy or a polymer.

Preferably the use of gas seal of an insulation assembly for gas-insulated electric apparatus, characterized in that the coating is made from metal, rubber or thermoplastic elastomer.

An insulation assembly for gas-insulated electric apparatus comprises an insulator body placed axially on a current- carrying conductor inside an insulating chamber filled with insulating medium, having an outer metal ring placed between the connecting flanges of the electric apparatus closing the insulating chamber; equipped with a gas seal placed between one of the internal surfaces of the flanges and the external collar surface of the insulator body and a part of the internal surface of the outer metal ring, characterized in that the gas seal has a form of a seal core ring which is covered with at least one layer of a coating made from different material that for the seal core ring.

An insulation assembly for gas-insulated electric apparatus comprises an insulator body placed axially on a current- carrying conductor inside an insulating chamber filled with insulating medium, having an outer metal ring placed between the connecting flanges of the electric apparatus closing the insulating chamber; equipped with a gas seal placed between one of the internal surfaces of the flanges, and the external surfaces of the insulating body between the two collars of the insulator body, characterized in that the gas seal has a form of a seal core ring which is covered with at least one layer of a coating made from different material that for the seal core ring.

An insulation assembly for gas-insulated electric apparatus comprises a cover covering the flange and closing the chamber filled with insulating medium, equipped with a gas seal which is placed in a grove formed in the internal surface of the cover, characterized in that the gas seal has a form of a seal core ring which is covered with at least one layer of a coating made from different material that for the seal core ring.

Preferably the insulation assembly for gas-insulated electric apparatus, characterized in that the seal core ring is made from material having a coefficient of gas permeability P lower than 2.0*10⁻¹⁶ expressed in mole meters per square meters second pascal [mol*m/(m²*s*Pa)] for carbon dioxide CO2 and 0.8*10⁻¹⁸ expressed in mole meters per square meters second pascal [mol*m/(m²*s*Pa)] for sulfur hexafluoride SF6 gas.

Preferably the insulation assembly for gas-insulated electric apparatus, characterized in that the seal core ring is made from metal, metal alloy or a polymer.

Preferably the insulation assembly for gas-insulated electric apparatus characterized in that the seal core ring has two kinds of coatings made from different material and placed on different faces of the seal core ring.

Preferably the insulation assembly for gas-insulated electric apparatus, characterized in that that the coatings are made from metal, rubber, thermoplastic elastomer.

The use of gas seal according to the invention allows for decreasing the leakage of the dielectric gas from the insulation chamber by utilization of core sealing material with very low permeation coefficient which decrease leakage due to permeation. The combination of low- or non-permeable core with carefully chosen coating material which blocks gas leakage at the materials interfaces allow to minimize total leakage of the sealing. According to the invention the seal core can have one or two coatings made of elastic material like rubber or plastic material like metal. Elastomeric materials are used as a coating for their good interface sealing ability and multiple use possibility due to elastic property. Metals like tin or copper are used as a coating to minimize leakage due to permeation. The sealing at the interface is achieved due to material plasticity so it can only be used for sealing surfaces made of materials harder that the coating material. Application of two different coating materials allow to minimize gas leakage by optimal choice of coating material adapted to the properties of sealed surfaces.

The invention is further presented in the exemplary embodiment on the drawing where:
Fig. 1 - shows a schematically illustrated first partial section through an insulation assembly which is installed in a gas-insulated switching installation in a cross-section for the first embodiment of the invention,
Fig.2 - shows a schematically illustrated first partial section through an insulation assembly which is installed in a gas-insulated switching installation in a cross-section for the second embodiment of the invention,
Fig.3 - shows a schematically illustrated first partial section through an insulation assembly which is installed in a gas-insulated switching installation in a cross-section for the third embodiment of the invention,

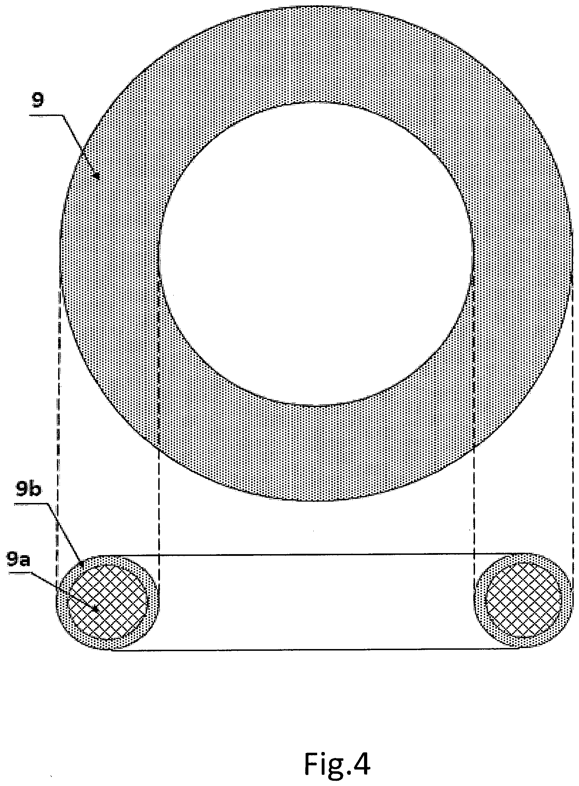

Fig.4 - shows the gas seal from fig.1 and fig.2 in the first version of embodiment of the gas seal,
Fig.5 - shows the gas seal from fig.1 and fig.2 in the second version of embodiment of the gas seal,

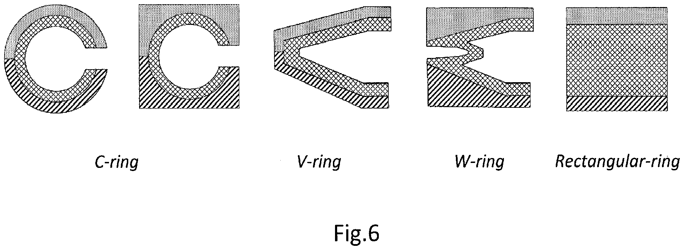

Fig.6 - shows the different shapes of gas seals from fig.1 and fig.2.

An insulation assembly 1 for switching installation for example GIS ( Gas Insulated Switchgear) comprises an insulator body 2 in the form of disk placed axially round axis X-X on a current carrying conductor 3. The insulator body is made from epoxy resin or other thermosetting or thermoplastic material. The insulator body 2 is placed in an insulating chamber 4 between the flanges 5 and 6 of the switching installation and axially inside the outer metal ring 7, closing the insulation chamber 4 filled with insulating medium 8. The insulation medium 8 could be one of insulating gases like sulfur hexafluoride SF₆, carbon dioxide CO2 or different gas mixtures based on fluoroketones like 1,1,1,3,4,4,4-heptafluoro-3-(trifluoromethyl)butan-2 (C5 FK). Between the internal surfaces 5a and 6a of the flanges 5,6 respectively, and external faces 2a of the insulator body 2 two gas seals 9 are inserted, radially to the conductor 3. The gas seal 9 has a form of a ring 9a covered entirely or partially with at least one layer of a coating 9b. The seal ring 9a has such properties that it is made of material characterized by an extremely low coefficient of gas permeability P, lower than 2.0*10⁻¹⁶ expressed in mole meters per square meters second pascal [mol*m/(m²*s*Pa)] for carbon dioxide CO2 and 0.8*10⁻¹⁸ expressed in mole meters per square meters second pascal [mol*m/(m²*s*Pa)] for sulfur hexafluoride SF6 gas. The coefficient of gas permeability P is presented in the Svensk Standard SS-ISO 15105-1:2009, "Plastics - Film and sheeting-Determination of gas-transmission rate - Part 1: Differential -pressure methods (ISO 15105-1:2007, IDT". The seal core ring 9 is made from metal, metal alloy or a polymer. The coating 9b can be made of different materials depending on structure and material of interacting surfaces. The coating 9b has such properties that it is made of soft material characterized by plasticity or elasticity assuring good gas sealing at the interface with either or both metal surface of flange (5a, 5b) and the of insulating body (2a). The coating material can be soft metal, rubber, thermoplastic elastomer or similar. The flanges 5 and 6 and the outer metal ring 7 are held together by a clamping bolt 10, and clamping nuts 11, closing the insulation chamber 4 round axis x-x. An exemplary gas seal 9 is carried out with a copper core 9a and a silver coating 9b.

If the seal ring 9a is covered entirely by the coating 9b which is arranged on the two faces of the seal ring 9a of gas seal 9, the coating 9b is the same for the both sides of the ring 9a or is different for the both sides, for example on one face side is a coating 9b' and on the other side id a coating 9b". The difference in the coating material on the both face side of the seal ring allows for choosing the best condition of the sealing the flange 5 or 6, made from metal and the insulator body 2, made from resin or other thermosetting or thermoplastic material.

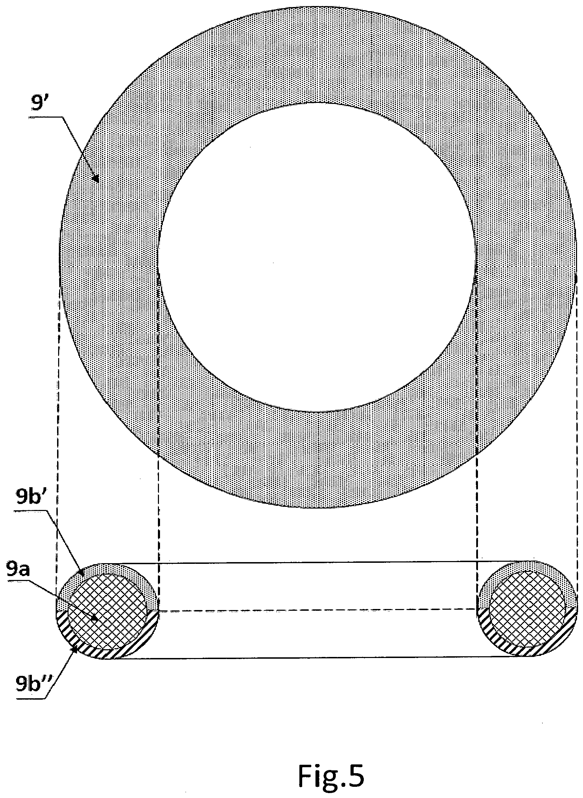

Also the shape of the gas seal 9 could be different as O-ring and be general described as X- ring, where X stands for any shape which fits into existing insulator body, such as C-ring, V-ring, W-ring or Rectangular-ring schematically illustrated on fig.5.

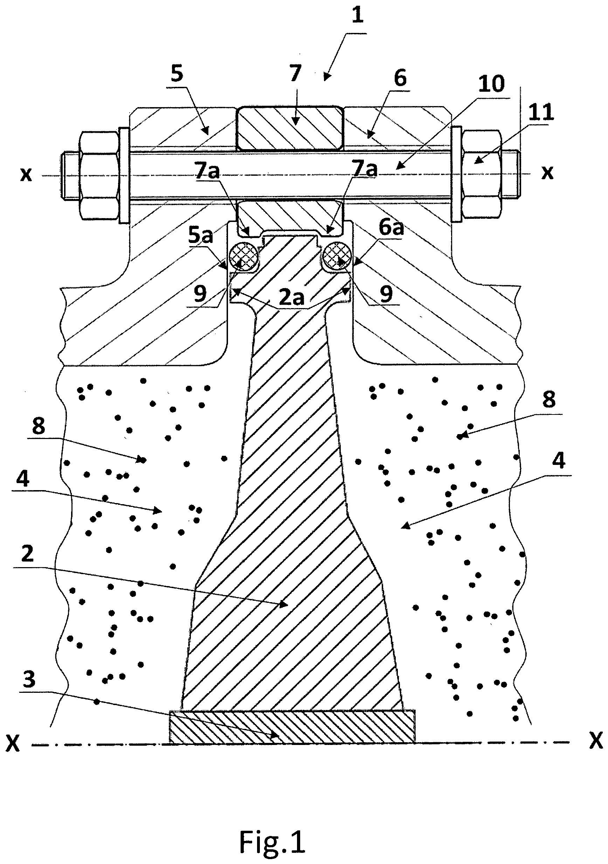

In the first embodiment of the invention (fig.1) where the insulator body 2 is equipped with a singular circumferential collar 2a placed on each face of the insulator body near the end of the body 2, the use of gas seal 9 is arranged in the space between the collar 2a, the end of insulator body 2, the internal surface 7a of the metal ring 7 and the internal surface 5a of the flange 5 or the internal surface 6a of the flange 6. The gas seal 9 is in contact with at least one internal surface 5a, 6a of the flange 5,6, respectively, and with the external surface of the collar 2a on the end of the insulator body in such a way that it is possible to choose the different coating 9b' or 9b" for contacting with the different material of flanges 5 or 6 and insulator body 2. The selection of the material depends on material and surface characteristics, for example roughness, hardness, thermal expansion coefficient of the insulator body 2 or flanges 5,6.

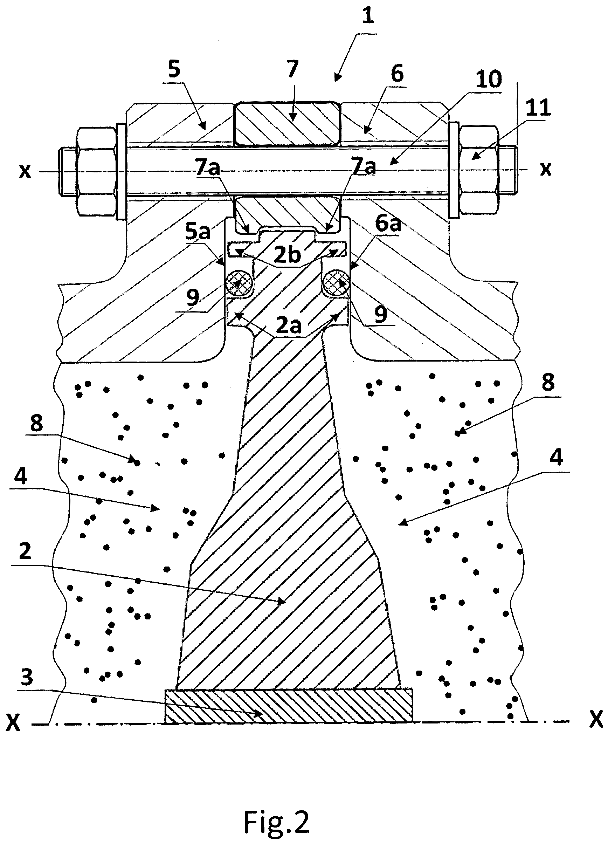

In the second embodiment of the invention (fig.2) where the insulator body 2 is equipped with a double circumferential collar, having a collar 2a and an adjacent collar 2b placed on each face of the insulator body near the end of the body 2, the use of gas seal 9 is arranged in a grove formed by the collar 2a and 2b. In this arrangement the gas seal 9 is arranged in a space limited by the external surface of the groove between the collars 2a and 2b of the insulator body and one of the internal surface 5a of the flange 5 or the surface 6a of the flange 6. The seal 9 is in contact with the surface of the insulation body and the internal surface of the flange 5 or 6 in such a way that it is possible to chose the different coating 9b' or 9b" what is depended on material and surface characteristics (roughness, hardness, thermal expansion coefficient) of insulator body 2 or flanges 5,6.

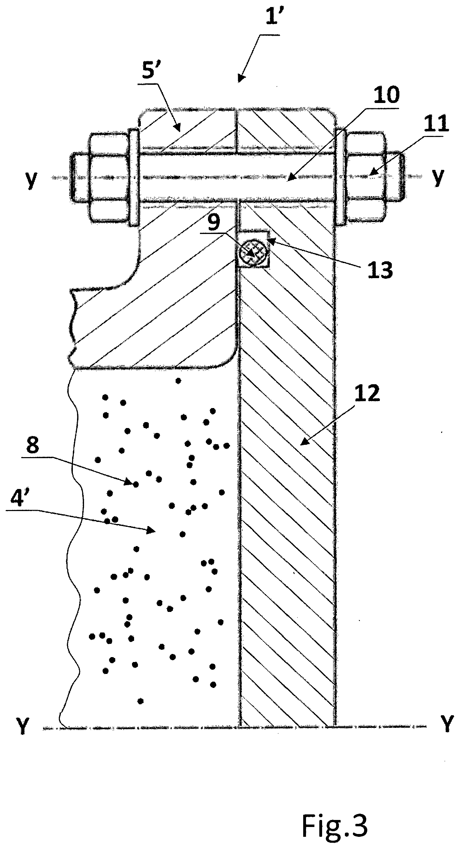

In the third embodiment of the invention (fig.3) where the insulator body 2 is replaced by a cover 12, axially situated round axis Y-Y and covering the flange 5' and closing the chamber 4' which is filled with insulating medium 8, the use of gas seal 9 is placed in a grove 13 formed in the internal surface of the cover 12. The cover 12 is fixed to the flange 5' through the clamping bolt 10, and clamping nuts 11, closing the insulation chamber 4'. The grove 13 is situated around the edge of the cover 12 and in a distance from the axis Y-Y less than the distance from the axis Y-Y of the arrangement of the clamping bolt axis y-y.

In all embodiments of the invention the gas seal 9 is made from at least two different materials one for the core ring 9a ant the other for the coating 9b. The seal ring 9a is made of material characterized by an extremely low coefficient of gas permeability P, lower than 2.0*10⁻¹⁶ expressed in mole meters per square meters second pascal [mol*m/(m²*s*Pa)] for carbon dioxide CO2 and 0.8*10⁻¹⁸ expressed in mole meters per square meters second pascal [mol*m/(m²*s*Pa)] for sulfur hexafluoride SF6 gas.

The coating material is chosen from metal, rubber, thermoplastic elastomer.

Also in all embodiments the shape of the gas seal 9 could be different as O-ring and be general described as X- ring, where X stands for any shape which fits into existing insulator body, such as C-ring, V-ring, W-ring or Rectangular-ring schematically illustrated on fig.5.

## Claims

1. Use of gas seal (9) in an insulation assembly (1, 1') for gas-insulated electric apparatus, where the assembly (1) comprises an insulator body (2) placed axially round axis X-X on a current- carrying conductor (3) in an insulating chamber (4) between the connecting flange (5), connecting flange (6) and an outer metal ring (7) closing the insulation chamber (4), filled with a gas insulating medium (8), or where the assembly (1') comprises a cover (12) placed axially round axis Y-Y in an insulating chamber (4'), filled with a gas insulating medium (8), **the said use is characterized in that** the gas seal (9) has an O-ring or X-ring type shape and consists of seal core (9a) covered with at least one layer of a coating (9b) and the seal core ring (9a) is made from different material than the coating (9b).

2. The use of gas seal (9') of an insulation assembly (1) for gas-insulated electric apparatus, according to claim 1, **characterized in that** the coating (9b) is arranged on the two faces of the seal core ring (9a) is a way that one face of the seal core ring (9a) is covered by a different coating (9b') that the other coating (9b") placed on the other face of the seal core ring (9a).

3. The use of gas seal (9, 9') of an insulation assembly (1) for gas-insulated electric apparatus, according to claims 1-2, **characterized in that** the seal core ring (9a) is made from material having a coefficient of gas permeability P lower than 2.0*10⁻¹⁶ expressed in mole meters per square meters second pascal [mol*m/(m²*s*Pa)] for carbon dioxide CO2 and 0.8*10⁻¹⁸ expressed in mole meters per square meters second pascal [mol*m/(m²*s*Pa)] for sulfur hexafluoride SF6 gas.

4. The use of gas seal (9, 9') of an insulation assembly (1) for gas-insulated electric apparatus, according to claims 1-3, **characterized in that** the seal core ring (9a) is made from metal, metal alloy or a polymer.

5. The use of gas seal (9) of an insulation assembly (1) for gas-insulated electric apparatus, according to claims 1-4, **characterized in that** the coating (9b') or (9b") is made from metal, rubber or thermoplastic elastomer.

6. An insulation assembly (1) for gas-insulated electric apparatus comprises an insulator body (2) placed axially on a current- carrying conductor (3) inside an insulating chamber (4) filled with insulating medium (8), having an outer metal ring (7) placed between the connecting flanges (5) and (6) of the electric apparatus closing the insulating chamber (8), equipped with a gas seal (9) placed between one of the internal surfaces (5a), (6a) of the flanges (5),(6), respectively, and between the external collar surface (2a) of the insulator body (2) and a part of the internal surface (7a) of the outer metal ring (7) **characterized in that** the gas seal (9) has a form of a seal core ring (9a) which is covered with at least one layer of a coating (9b) made from a different material that for the seal core ring (9a).

7. An insulation assembly (1) for gas-insulated electric apparatus comprises an insulator body (2) placed axially on a current- carrying conductor (3) inside an insulating chamber (4) filled with insulating medium (8), having an outer metal ring (7) placed between the connecting flanges (5) and (6) of the electric apparatus closing the insulating chamber (8); equipped with a gas seal (9) placed between one of the internal surfaces (5a), (6a) of the flange (5),(6), respectively, and the external surfaces of the insulating body (2) between the collars (2a) and (2b) of the insulator body (2), **characterized in that** the gas seal (9) has a form of a seal core ring (9a) which is covered with a coating (9b) made from different material that for the seal core ring (9a).

8. An insulation assembly (1') for gas-insulated electric apparatus comprises a cover (12) covering the flange (5') and closing the chamber (4') which is filled with insulating medium (8), equipped with a gas seal (9) which is placed in a grove (13) formed in the internal surface of the cover (12), **characterized in that** the gas seal (9) has a form of a seal core ring (9a) which is covered with a coating (9b) made from different material that for the seal core ring (9a).

9. An insulation assembly (1, 1') for gas-insulated electric apparatus according to claims 6,7 or 8, **characterized in that** the seal core ring (9a) is made from material having a coefficient of gas permeability P lower than 2.0*10⁻¹⁶ expressed in mole meters per square meters second pascal [mol*m/(m²*s*Pa)] for carbon dioxide CO2 and 0.8*10⁻¹⁸ expressed in mole meters per square meters second pascal [mol*m/(m²*s*Pa)] for sulfur hexafluoride SF6 gas.

10. An insulation assembly (1, 1') for gas-insulated electric apparatus according to claims 6,7 or 8, **characterized in that** the seal core ring (9a) is made from metal, metal alloy or a polymer.

11. An insulation assembly (1,1') for gas-insulated electric apparatus according to claims 6,7 or 8, , **characterized in that** the seal core ring (9a) has two kinds of coatings (9b') and (9b") made from different material and placed on different faces of the seal core ring (9a).

12. An insulation assembly (1, 1') for gas-insulated electric apparatus according to claim 11, **characterized in that** that the coatings (9b, 9b', 9b") are made from metal, rubber or thermoplastic elastomer.
